# FASCICULE DE BREVET EUROPEEN

(11) **EP 3 415 479 B1**
(45) Date de publication et mention de la délivrance du brevet: **30.10.2024**
(21) Numéro de dépôt: 18179042.9
(22) Date de dépôt: 06.11.2014
(51) Int. Cl.: C04B 26/26, C08K 3/18, C08K 3/32, C08L 53/02, E01C 7/18, C08L 95/00

(54) **COMPOSITIONS BITUMINEUSES A BASE DE DERIVES PHOSPHORIQUES**
BITUMINÖSE ZUSAMMENSETZUNGEN MIT PHOSPHORDERIVATEN
BITUMINOUS COMPOSITIONS COMPRISING PHOSPHORIC DERIVATIVES

(30) Priorité: 12.11.2013 FR 1361031
(43) Date de publication de la demande: 19.12.2018
(62) Demande divisionnaire de: 14798750.7
(73) Titulaire: TotalEnergies OneTech, 92400 Courbevoie (FR)
(72) Inventeur: MOUAZEN, Mouhamad, 92000 NANTERRE (FR); BOTEL, Romuald, 38121 CHONAS L'AMBALLAN (FR)
(74) Mandataire: Bandpay & Greuter

(56) Documents cités:
- WO-A1-2013/092531
- US-A1- 2006 081 152
- US-A1- 2011 015 311
- US-B2- 7 998 265
- AMOSA ET AL: "sulphide scavengers in oil and gas industry- A review", vol. 61, no. 2, 1 February 2010 (2010-02-01), pages 85 - 92, XP009156263, ISSN: 0027-755X, Retrieved from the Internet <URL:http://hrcak.srce.hr/file/75684> [retrieved on 20140708]

## Description

### DOMAINE TECHNIQUE

La présente invention appartient au domaine des compositions bitumineuses et leurs additifs de performance. Plus spécifiquement, elle concerne des compositions bitumineuses comprenant des dérivés phosphoriques et leur procédé de préparation.

L'invention concerne également l'utilisation de ces compositions bitumineuses dans les domaines des applications routières, notamment dans la fabrication de liants routiers tels que les enrobés à chaud, les enrobés à froid, les asphaltes ou les enduits superficiels, et dans les domaines des applications industrielles, par exemple dans la fabrication de revêtements intérieurs et extérieurs.

### ART ANTERIEUR

L'utilisation du bitume dans la fabrication de matériaux pour applications routières et industrielles est connue de longue date : le bitume est le principal liant hydrocarboné utilisé dans le domaine de la construction routière ou du génie civil. Pour pouvoir être utilisé comme liant dans ces différentes applications, le bitume doit présenter certaines propriétés mécaniques et dynamiques.

En général, les bitumes conventionnels ne présentent pas simultanément l'ensemble des qualités requises. Des compositions bitumineuses sont utilisées pour la préparation de liants pour des revêtements de surfaces diverses et, en particulier, comme revêtements superficiels routiers, à condition que ces compositions présentent en combinaison un certain nombre de caractéristiques mécaniques et/ou dynamiques. Les propriétés mécaniques des compositions bitumeuses sont déterminées par des essais normalisés des différentes caractéristiques mécaniques telles que le point de ramollissement, la pénétrabilité et les caractéristiques rhéologiques en traction déterminée.

De nombreux travaux ont porté sur l'amélioration des propriétés mécaniques, élastiques et/ou rhéologiques de compositions bitumineuses.

On sait depuis longtemps que l'addition de polymères variés à ces bitumes conventionnels permet de modifier favorablement les propriétés mécaniques de ces derniers et de former des compositions bitume/polymère ayant des qualités mécaniques améliorées par rapport à celles des bitumes seuls.

On sait en outre que la stabilité des compositions bitume/polymère peut être améliorée par couplage chimique du polymère au bitume. Ce couplage chimique réalisé classiquement par réticulation du polymère permet en outre d'élargir le domaine d'utilisation des compositions bitume/polymère. On peut citer les documents FR2376188, FR2429241, FR2528439, EP0360656, à titre d'exemple de procédé faisant intervenir un copolymère statistique ou séquencé de styrène et d'un diène conjugué réticulé au soufre. Le document FR2528439 traite en particulier de la réticulation avec un polysulfure. Le document EP0360656 décrit l'utilisation d'un accélérateur de vulcanisation donneur de soufre utilisé seul ou en association avec du soufre chimiquement non lié et/ou un polysulfure ou un accélérateur de vulcanisation non donneur de soufre.

Les compositions bitume/polymère réticulé ainsi obtenues sont connues sous l'acronyme anglais « PmB », pour Polymer-modified Bitumen ou « PmA » pour Polymer-modified Asphalt. Pour des raisons de clarté, nous utiliserons uniquement l'acronyme PmB pour les compositions bitume/polymère réticulé. La réticulation des compositions bitume/polymère leur confère de très bonnes propriétés en termes de stabilité au stockage, cohésivité, capacité d'allongement et résistance au vieillissement.

L'acide phosphorique et/ou l'acide polyphosphorique est utilisé depuis les années 70 pour améliorer les propriétés rhéologiques des bitumes ou des compositions bitumineuses, notamment pour augmenter leur consistance. On peut citer, à titre d'exemple, le document US3751278 qui décrit un procédé de fabrication mettant en oeuvre l'acide phosphorique pour augmenter la viscosité à haute température sans diminuer la consistance à température ambiante.

Certains adjuvants acides ont également été utilisés pour obtenir des compositions bitume/polymère à caractère multigrade renforcé. Dans la demande de brevet EP703949, les auteurs ont, en outre, mis en évidence que les propriétés mécaniques et/ou rhéologiques pouvaient être améliorées, notamment l'intervalle de plasticité pouvait être élargi en utilisant des adjuvants minéraux acides spécifiques. Les auteurs citent, notamment, les acides phosphoriques, les acides sulfoniques, les acides sulfuriques et leurs mélanges.

Dans le document WO9714753, les auteurs ont montré que l'on pouvait élargir l'intervalle de plasticité des compositions bitume/polymère réticulé au soufre en incorporant dans lesdites compositions un adjuvant minéral du type acide ou anhydride d'acide après la phase de réticulation au soufre.

Une autre problématique liée à l'utilisation de compositions bitumineuses concerne le dégagement de sulfure d'hydrogène (hydrogène sulfuré), noté H₂S, lors de leur procédé de préparation ou de leur utilisation. L'émission de H₂S est plus importante pour les compositions bitume/polymère réticulé du fait de l'utilisation d'agent réticulant donneur de soufre dans leur procédé de préparation. Le sulfure d'hydrogène (H₂S) est un gaz incolore et toxique, présentant une odeur caractéristique à très basse concentration. Pour des raisons de sécurité et de contraintes environnementales, la réduction voire la suppression des émissions de sulfure d'hydrogène lors de la production de compositions bitumineuses, en particulier de compositions bitume/polymère réticulé constitue un enjeu industriel.

Des solutions ont été proposées dans la littérature pour réduire les émissions d'hydrogène sulfuré lors de la fabrication ou l'utilisation de compositions bitumineuses. En particulier, l'ajout d'un agent apte à piéger le sulfure d'hydrogène (H₂S) lors de la réticulation de compositions bitumineuses a été proposé pour remédier à cet inconvénient. A titre d'exemple, on peut citer les sels métalliques organiques ou inorganiques décrits dans la demande internationale WO2005065177 comme aptes à piéger le H₂S. Le procédé mis en oeuvre pour réduire les dégagements de H₂S consiste à introduire dans un réacteur contenant une composition bitume/polymère préalablement mélangé, un sel métallique organique ou inorganique. Le sel métallique ajouté en masse dans le réacteur, est ensuite agité dans le réacteur durant la réaction de réticulation.

Le document US2006081152 décrit une composition comprenant une base bitume, un scavenger H2S sélectionné parmi les oxydes de zinc, de cuivre, de fer ou d'aluminium.

La demanderesse s'est intéressée à l'efficacité des agents aptes à neutraliser et/ou piéger le H₂S dans les procédés de préparation de compositions bitumineuses, notamment des compositions bitume/polymère réticulé mettant en oeuvre des adjuvants minéraux acides.

L'objet de la présente invention concerne l'amélioration des propriétés mécaniques et dynamiques, notamment l'intervalle de plasticité de compositions bitumineuses tout en réduisant les risques d'émissions de H₂S lors de la préparation et/ou l'utilisation de telles compositions bitumineuses.

Un autre objet de l'invention est d'obtenir des compositions bitumineuses relargant de faibles quantités de H₂S, de préférence des quantités inférieures à 10 ppm, plus préférentiellement inférieures ou égales à 1 ppm lors de la préparation et/ou l'utilisation (transport, chargement, déchargement et stockage) de telles compositions bitumineuses, étant entendu que les températures de préparation et/ou d'utilisation sont classiquement comprises entre 90°C et 200°C et que le taux en H₂S est mesuré selon une méthode classique de titration d'H₂S en phase liquide.

La présente invention concerne également un procédé de préparation de telles compositions bitumineuses.

### BREVE DESCRIPTION

Dans le cadre de la préparation de compositions bitumineuses, la demanderesse a découvert que, de façon surprenante, l'utilisation d'un adjuvant acide a un effet négatif sur l'efficacité de certains agents aptes à neutraliser et/ou piéger le sulfure d'hydrogène (H₂S).

En particulier, la demanderesse a mis en évidence que l'adjuvant acide désactive lesdits agents aptes à neutraliser et/ou piéger le sulfure d'hydrogène (H₂S).

La demanderesse a, en outre, découvert que la sélection de certains agents spécifiques, aptes à neutraliser et/ou piéger le sulfure d'hydrogène (H₂S) permet de remédier à cet inconvénient. La combinaison spécifique d'un adjuvant acide et d'un agent apte à neutraliser et/ou piéger le sulfure d'hydrogène (H₂S) permet d'obtenir une composition bitumineuse à émissions de H₂S réduites tout en améliorant les propriétés mécaniques et/ou dynamiques de ladite composition. L'utilisation d'une telle combinaison est particulièrement avantageuse pour les compositions bitume/polymère réticulé.

La demanderesse a également découvert que, pour obtenir cet effet combiné, l'agent apte à neutraliser et/ou piéger le sulfure d'hydrogène (H₂S) et l'adjuvant acide peuvent être utilisés ensemble ou successivement, l'ordre d'introduction n'ayant pas d'influence.

Pour des raisons de simplification, le terme anglo-saxon «scavenger H₂S» sera systématiquement utilisé dans la suite de la présente demande pour nommer un agent apte à neutraliser et/ou piéger le sulfure d'hydrogène (H₂S).

On entend par composition bitumineuse, toute composition de bitume contenant en plus du bitume au moins un autre constituant, par exemple un élastomère et/ou au moins un additif.

Selon l'invention, le but de l'invention est atteint par un procédé de préparation d'une composition bitumineuse, ce procédé comprenant le traitement d'un bitume ou d'une composition bitumineuse par :
- entre 0,1% et 1% en masse d'un scavenger H₂S choisi parmi les oxydes de cuivre et leurs mélanges avec les hydroxydes, les hydrates, les carbonates, les hydroxy-carbonates, les carboxylates, les nitrates et les phosphates de cuivre, et
- un adjuvant acide choisi parmi les acides phosphoriques, les acides polyphosphoriques et leurs mélanges,

les pourcentages massiques étant calculés par rapport à la masse totale de la composition bitumineuse,
le scavenger H₂S et l'adjuvant acide étant utilisés séparément.

Selon l'invention, le but de l'invention est aussi atteint par un procédé de préparation d'une composition bitumineuse, ce procédé comprenant le traitement d'un bitume ou d'une composition bitumineuse par :
- entre 0,1% et 1% en masse d'un scavenger H₂S choisi parmi les oxydes de cuivre et leurs mélanges avec les hydroxydes, les hydrates, les carbonates, les hydroxy-carbonates, les carboxylates, les nitrates et les phosphates de cuivre, et
- un adjuvant acide choisi parmi les acides phosphoriques, les acides polyphosphoriques et leurs mélanges,

ce procédé comprenant l'ajout direct dans le bitume ou dans la composition bitumineuse d'une composition d'additifs comprenant le scavenger H₂S et l'adjuvant acide,
les pourcentages massiques étant calculés par rapport à la masse totale de la composition bitumineuse.

Le scavenger H₂S est choisi parmi les oxydes de cuivre et leurs mélanges avec les hydroxydes, les hydrates, les carbonates, les hydroxy-carbonates, les carboxylates, les nitrates et les phosphates de cuivre.

Selon un mode de réalisation particulier préféré, le scavenger H₂S est choisi parmi les oxydes de cuivre et leurs mélanges.

Selon l'invention, le but de l'invention est également atteint par l'utilisation d'un scavenger H₂S pour réduire les émissions de H₂S de bitume ou d'une composition bitumineuse traité(e) avec un adjuvant acide, lesdits scavenger H₂S et adjuvant acide étant tels que décrits ci-dessus.

Selon un mode de réalisation particulier, l'utilisation d'un scavenger H₂S pour réduire les émissions de H₂S de bitume ou d'une composition bitumineuse traité(e) avec un adjuvant acide est telle que l'adjuvant acide et le scavenger H₂S sont sous forme d'un paquet d'additifs tel que décrit précédemment.

Selon l'invention, le but de l'invention est également atteint par un procédé de préparation d'une composition bitumineuse, dans lequel on met en contact du bitume, un adjuvant acide et un scavenger H₂S, en opérant à des températures comprises entre 90°C et 200°C, de préférence entre 120°C et 200°C, plus préférentiellement entre 170°C et 190°C, et sous agitation pendant une durée d'au moins 10 minutes, avantageusement d'au moins 2 heures, de préférence entre 20 minutes et 6 heures, plus préférentiellement entre 30 minutes et 2 heures, lesdits scavenger H₂S et adjuvant acide étant tels que définis ci-dessus.

Selon un mode de réalisation particulier, la proportion d'adjuvant acide est comprise entre 0,05% et 15% en masse, de préférence entre 0,05% et 5% en masse, plus préférentiellement entre 0,05% et 2% en masse, les pourcentages massiques étant calculés par rapport à la masse totale de la composition bitumineuse.

Selon une variante, le procédé comprend le chauffage du bitume à une température comprise entre 90°C et 200°C, de préférence entre 120°C et 200°C, plus préférentiellement entre 170°C et 190°C, durant au moins 10 minutes, de préférence entre 20 minutes et 6 heures, plus préférentiellement entre 30 minutes et 2 heures sous agitation suivi par l'addition de l'adjuvant acide et du scavenger H₂S, le milieu réactionnel étant ensuite maintenu à température durant au moins 10 minutes sous agitation, de préférence entre 20 minutes et 6 heures, plus préférentiellement entre 30 minutes et 2 heures.

Avantageusement, le procédé comprend en outre une étape d'addition de 0,5% à 10% en masse, de préférence entre 1% et 6% en masse, plus préférentiellement entre 1,5% et 4% en masse d'un élastomère, étant entendu que la composition bitumineuse est alors une composition bitume/polymère et que les pourcentages massiques étant calculés par rapport à la masse totale de la composition bitume/polymère.

Selon un mode de réalisation particulier préféré, l'élastomère est choisi parmi les élastomères réticulables au soufre et le procédé comprend en outre une étape de réticulation dudit élastomère par un agent de couplage donneur de soufre ajouté en quantité propre à fournir de 0,1% à 20% en masse, avantageusement de 1% à 10% en masse, de préférence de 1% à 6% en masse, plus préférentiellement de 2% à 5% en masse de soufre libre par rapport à la masse d'élastomère réticulable au soufre dans ladite composition, étant entendu que la composition bitumineuse est alors une composition bitume/polymère réticulé.

L'agent de couplage donneur de soufre est, avantageusement, choisi dans le groupe consistant en le soufre élémentaire, les polysulfures d'hydrocarbyle, les accélérateurs de vulcanisation donneurs de soufre, les mélanges de tels produits entre eux et/ou avec des accélérateurs de vulcanisation non donneurs de soufre.

Selon une variante préférée, l'élastomère est choisi parmi les copolymères statistiques ou séquencés d'un hydrocarbure monovinyl aromatique et d'un diène conjugué.

L'élastomère comprend, avantageusement, entre 5 % et 50% en masse, de préférence entre 15% et 40% en masse d'hydrocarbure monovinyl aromatique.

L'élastomère est, de préférence, choisi parmi les copolymères statistiques ou séquencés de styrène et d'un diène conjugué.

Selon un développement particulier, la masse moléculaire moyenne en masse de l'élastomère est comprise entre 10 000 et 600 000 daltons, de préférence entre 30 000 et 400 000 daltons.

Selon l'invention, le but de l'invention est également atteint par une composition bitumineuse susceptible d'être obtenue par le procédé de préparation tel que défini ci-dessus.

L'invention concerne également un liant bitumineux comprenant une composition bitumineuse telle que définie ci-dessus.

L'invention concerne également un asphalte comprenant un liant bitumineux tel que décrit ci-dessus, et des charges minérales et/ou synthétiques.

L'invention concerne en outre un enrobé bitumineux comprenant un liant bitumineux tel que décrit ci-dessus, des granulats, et éventuellement des charges minérales et/ou synthétiques.

### DESCRIPTION DETAILLEE

D'autres avantages et caractéristiques ressortiront plus clairement de la description qui va suivre et dont les modes particuliers de réalisation de l'invention sont donnés à titre d'exemples non limitatifs.

Selon un mode de réalisation particulier, un paquet d'additifs de performance comprend un adjuvant acide et un scavenger H₂S.

On entend par paquet d'additifs, une composition comprenant au moins deux additifs. Le paquet d'additifs peut contenir des additifs seuls ou dispersés/solubilisés dans un solvant inerte, en particulier de type huile minérale, selon des procédés bien connus dans le domaine des additifs pour bitume. Dans le domaine de l'additivation, on utilise également couramment le terme anglais « package » pour identifier une composition d'additifs. Le terme « concentré d'additifs » peut également être employé pour désigner le paquet d'additif, en particulier lorsque celui-ci se présente sous forme d'une solution.

On entend par additifs de performance pour bitume ou composition bitumineuse, des additifs aptes à être incorporés dans une composition bitumineuse, par exemple relativement à leur compatibilité, leur solubilité ou leur stabilité dans ledit bitume ou ladite composition bitumineuse et lui conférant des propriétés améliorées comparativement au bitume ou à la composition bitumineuse non additivée. Ces propriétés peuvent être mécaniques et/ou dynamiques, et/ou concerner des problématiques d'environnement et de sécurité, par exemple des problématiques d'émissions de H₂S.

L'adjuvant acide est choisi parmi les acides phosphoriques, les acides polyphosphoriques et leurs mélanges.

Différents grades d'acide phosphorique et/ou d'acide polyphosphorique contenant diverses quantités d'acide orthophosphorique sont disponibles commercialement. Les acides phosphoriques commerciaux contiennent généralement de 50% à 200% d'acide orthophosphorique.

Le terme acide polyphosphorique se réfère à des grades concentrés d'acide phosphorique (H₃PO₄) supérieurs à 95%, généralement compris entre 97% et 118%, où le pourcentage correspond à la concentration apparente en H₃PO₄. L'acide polyphosphorique est représenté par la formule Hₙ₊₂PₙO₃ₙ₊₁ dans laquelle n ≥ 2. L'acide polyphosphorique est généralement un mélange d'acide pyrophosphorique (n=2), triphosphorique (n=3) et des acides supérieurs (n>3). Les acides phosphoriques et polyphosphoriques peuvent contenir d'autres acides tels que de l'acide sulfurique et/ou de l'acide fluorhydrique comme impuretés à des concentrations allant classiquement jusqu'à 2%.

Le scavenger H₂S est choisi parmi les oxydes de cuivre et leurs mélanges avec les hydroxydes, les hydrates, les carbonates, les hydroxy-carbonates, les carboxylates, les nitrates et les phosphates de cuivre.

Le rapport massique du scavenger H₂S par rapport à l'adjuvant acide peut avantageusement être compris entre 1:300 et 100:1, de préférence entre 1:10 et 10:1, plus préférentiellement entre 1:10 et 5:1.

Le paquet d'additifs de performance peut être constitué uniquement du scavenger H₂S et de l'adjuvant acide, seuls ou en mélange dans un ou plusieurs solvants inertes, étant entendu que lesdits scavenger H₂S et adjuvant acide peuvent contenir respectivement jusqu'à 2% massique d'impuretés sans pour autant que l'on considère qu'ils ne sont pas utilisés seuls. Le solvant doit être inerte vis-à-vis de l'adjuvant acide et/ou du scavenger H₂S.

De façon générale, la quantité de solvant dans le paquet d'additifs est comprise entre 1% et 95%, de préférence entre 10% et 90%, plus préférentiellement entre 20% et 80% en masse, encore plus préférentiellement entre 40% et 60%, les pourcentages massiques étant calculés par rapport à la masse totale dudit paquet d'additifs.

On choisira, de préférence, le ou les solvants inertes de manière à solubiliser à la fois le scavenger H₂S et l'adjuvant acide. On choisira, par exemple, le solvant parmi les huiles minérales.

De préférence, le paquet d'additifs est constitué uniquement du scavenger H₂S et de l'adjuvant acide, le rapport massique du scavenger H₂S par rapport à l'adjuvant acide étant tel que décrit précédemment. Un tel paquet d'additifs est stable au stockage et peut être ajouté directement lors de la préparation de la composition bitume/polymère réticulé.

Le paquet d'additifs peut être utilisé directement pour le traitement du bitume ou de compositions bitumineuses. En particulier, le paquet d'additifs peut, avantageusement, être utilisé dans le procédé de préparation de compositions bitumineuses, de préférence de compositions bitume/polymère, plus préférentiellement de compositions bitume/polymère réticulé mettant en oeuvre un agent de couplage donneur de soufre.

Selon une variante, le scavenger H₂S et l'adjuvant acide tels que décrits ci-dessus peuvent être utilisés séparément pour le traitement du bitume ou de compositions bitumineuses, en particulier pour la préparation de compositions bitume/polymère, de préférence de compositions bitume/polymère réticulé mettant en ouvre un agent de couplage donneur de soufre.

Selon un mode de réalisation particulier, un procédé de préparation d'une composition bitume/polymère réticulé comprend une étape de traitement avec l'adjuvant acide et le scavenger H₂S décrits ci-dessus à une température comprise entre 90°C et 200°C, de préférence entre 120°C et 200°C, plus préférentiellement entre 170°C et 190°C, pendant une durée d'au moins 10 minutes, de préférence comprise entre 20 minutes et 6 heures, plus préférentiellement comprise entre 30 minutes et 2 heures.

Selon un mode de réalisation particulier, le procédé de préparation d'une composition bitume/polymère réticulé comprend, par exemple, les étapes suivantes :
- on introduit dans un réacteur un bitume et un élastomère réticulable au soufre,
- le mélange est agité jusqu'à obtention d'un mélange bitume/élastomère homogène et chauffé à une température comprise entre 90°C et 200°C, de préférence entre 120°C et 200°C, plus préférentiellement entre 170°C et 190°C, pendant une durée d'au moins 10 minutes, de préférence comprise entre 20 minutes et 6 heures, plus préférentiellement comprise entre 1 heure et 5 heures,
- on réticule ledit élastomère par ajout d'un agent de couplage donneur de soufre dans le milieu réactionnel en quantité propre à fournir de 0,1% à 20% en masse, avantageusement de 1% à 10% en masse, de préférence de 1% à 6% en masse, plus préférentiellement de 2% à 5% en masse de soufre libre, par rapport à la masse totale de l'élastomère et en maintenant le milieu réactionnel sous agitation à une température comprise entre 90°C et 200°C, de préférence entre 120°C et 200°C, plus préférentiellement entre 170°C et 190°C, pendant une durée d'au moins 10 minutes, de préférence comprise entre 20 minutes et 6 heures, plus préférentiellement comprise entre 30 minutes et 2 heures,
- on additionne le scavenger H₂S décrit ci-dessus, le milieu réactionnel étant maintenu à une température comprise entre 90°C et 200°C, de préférence entre 120°C et 200°C, plus préférentiellement entre 170°C et 190°C, pendant une durée d'au moins 10 minutes, de préférence comprise entre 20 minutes et 6 heures, plus préférentiellement comprise entre 30 minutes et 2 heures,
- on additionne l'adjuvant acide décrit ci-dessus, le milieu réactionnel étant maintenu à une température comprise entre 90°C et 200°C, de préférence entre 120°C et 200°C, plus préférentiellement entre 170°C et 190°C, pendant une durée d'au moins 10 minutes, de préférence comprise entre 20 minutes et 6 heures, plus préférentiellement comprise entre 30 minutes et 2 heures.

Selon un autre mode de réalisation particulier, le procédé de préparation d'une composition bitume/polymère réticulé comprend, par exemple, les étapes suivantes :
- on introduit dans un réacteur un bitume et un élastomère réticulable au soufre,
- le mélange est agité jusqu'à obtention d'un mélange bitume/élastomère homogène et chauffé à une température comprise entre 90°C et 200°C, de préférence entre 120°C et 200°C, plus préférentiellement entre 170°C et 190°C, pendant une durée d'au moins 10 minutes, de préférence comprise entre 20 minutes et 6 heures, plus préférentiellement comprise entre 1 heure et 5 heures,
- on réticule ledit élastomère par ajout d'un agent de couplage donneur de soufre dans le milieu réactionnel en quantité propre à fournir de 0,1% à 20% en masse, avantageusement de 1% à 10% en masse, de préférence de 1% à 6% en masse, plus préférentiellement de 2% à 5% en masse de soufre libre, par rapport à la masse totale de l'élastomère et en maintenant le milieu réactionnel sous agitation à une température comprise entre 90°C et 200°C, de préférence entre 120°C et 200°C, plus préférentiellement entre 170°C et 190°C, pendant une durée d'au moins 10 minutes, de préférence comprise entre 20 minutes et 6 heures, plus préférentiellement comprise entre 30 minutes et 2 heures,

- on additionne simultanément l'adjuvant acide et le scavenger H₂S décrits ci-dessus, le milieu réactionnel étant maintenu à une température comprise entre 90°C et 200°C, de préférence entre 120°C et 200°C, plus préférentiellement entre 170°C et 190°C, pendant une durée d'au moins 10 minutes, de préférence comprise entre 20 minutes et 6 heures, plus préférentiellement comprise entre 30 minutes et 2 heures.

L'ajout simultané du scavenger H₂S et de l'adjuvant acide a l'avantage de réduire la durée de préparation de la composition bitume/polymère réticulé et d'améliorer l'intervalle de plasticité de ladite composition. On peut avantageusement utiliser le paquet d'additifs tel que décrit ci-dessus pour l'étape d'addition simultanée de l'adjuvant acide et du scavenger H₂S.

Pour chaque étape, les températures peuvent être identiques ou non.

Le bitume selon la présente invention peut comporter une ou plusieurs bases bitume. Les bases bitume peuvent être issues de différentes origines. On peut citer tout d'abord les bases bitumes d'origine naturelle, celles contenues dans des gisements de bitume naturel, d'asphalte naturel ou les sables bitumineux.

Les bases bitume peuvent, avantageusement, provenir du raffinage du pétrole brut, de préférence, de la distillation atmosphérique et/ou sous vide du pétrole. Les bases bitume peuvent éventuellement être soufflées, viscoréduites et/ou désasphaltées.

Les bases bitume peuvent être choisies parmi les bitumes de grade dur ou de grade mou. Les différentes bases bitumes obtenues par les procédés de raffinage peuvent être combinés entre elles pour obtenir le meilleur compromis technique.

Les bases bitume utilisées peuvent également être choisies parmi les bitumes fluxés par addition de solvants volatils, de fluxants d'origine pétrolière et/ou de fluxants d'origine végétale.

Le bitume est, avantageusement, choisi parmi les bitumes routiers de classes 10/20 à 160/220 et les bitumes spéciaux de toutes classes.

Le bitume représente entre 90% et 99,3% en masse, de préférence entre 94% et 99% en masse de la composition bitume/polymère réticulé.

La quantité d'adjuvant acide ajouté représente, avantageusement, entre 0,05% et 15% en masse, de préférence entre 0,05% et 5% en masse, plus préférentiellement entre 0,05% et 2% en masse de la masse totale de la composition bitume/polymère réticulé.

La quantité de scavenger H₂S ajouté représente entre 0,1% et 1% en masse de la masse totale de la composition bitume/polymère réticulé.

Dans le mode de réalisation particulier décrit ci-dessus, l'adjuvant acide peut être incorporé au mélange bitume/polymère réticulé avant ou après le scavenger H₂S, une incorporation simultanée pouvant également être envisagée, notamment par ajout d'un paquet d'additifs tel que décrit ci-dessus dans le mélange bitume/polymère réticulé.

La quantité d'élastomère introduit dans le réacteur représente, avantageusement, entre 0,5% et 10% en masse, de préférence entre 1% et 6% en masse, plus préférentiellement entre 1,5% et 4% en masse de la masse totale de la composition bitume/polymère réticulé.

La masse moléculaire moyenne en masse de l'élastomère est, avantageusement, comprise entre 10 000 et 600 000 daltons, de préférence entre 30 000 et 400 000 daltons.

L'élastomère est, de préférence, choisi parmi les copolymères statistiques ou séquencés d'un hydrocarbure monovinyl aromatique et d'un diène conjugué. En particulier, l'élastomère comprend, avantageusement, entre 5 % et 50% en masse, de préférence entre 15% et 40% en masse d'hydrocarbure monovinyl aromatique.

L'élastomère est, avantageusement, choisi parmi les copolymères statistiques ou séquencés de styrène et d'un diène conjugué tel que butadiène, isoprène, chloroprène, butadiène carboxylé, isoprène carboxylé. On choisira, de préférence, les copolymères statistiques ou séquencés de styrène et de butadiène.

L'élastomère peut consister en un ou plusieurs copolymères choisis parmi les copolymères séquencés, avec ou sans charnière statistique, de styrène et de butadiène, de styrène et d'isoprène, de styrène et de chloroprène, de styrène et de butadiène carboxylé ou encore de styrène et d'isoprène carboxylé.

De préférence, le copolymère de styrène et de diène conjugué est choisi parmi les copolymères di- ou triséquencés de styrène et de butadiène, de styrène et d'isoprène, de styrène et de butadiène carboxylé ou encore de styrène et d'isoprène carboxylé qui ont des teneurs en styrène et des masses moléculaires moyennes en masse situées dans les intervalles définis précédemment.

Selon une variante, l'élastomère est choisi parmi les copolymères statistiques ou séquencés de styrène et de butadiène renfermant de 50% à 95%, plus particulièrement de 60% à 95% en masse de motifs issus du butadiène. En outre, la proportion de motifs à double liaison 1,2 issus du butadiène peut, avantageusement, être comprise entre 12% et 50% en masse dudit copolymère. L'élastomère peut, par exemple, être un copolymère styrène/butadiène de type haut vinyle c'est-à-dire ayant une teneur en double liaison 1,2 issus du butadiène supérieure à 20% en masse dudit copolymère.

Les agents de couplage donneur de soufre utilisables sont de nature très variée et sont choisis en fonction de l'élastomère à réticuler dans la composition bitume/polymère réticulé.

L'agent de couplage donneur de soufre est, avantageusement, choisi dans le groupe consistant en le soufre élémentaire, les polysulfures d'hydrocarbyle, les accélérateurs de vulcanisation donneurs de soufre, les mélanges de tels produits entre eux et/ou avec des accélérateurs de vulcanisation non donneurs de soufre.

Le soufre élémentaire susceptible d'être utilisé pour constituer, en partie ou en totalité, l'agent réticulant est, avantageusement, du soufre en fleur et, de préférence, du soufre cristallisé sous la forme orthorhombique et connu sous le nom de soufre alpha.

Les accélérateurs de vulcanisation sont soit des polysulfures d'hydrocarbyle, soit des accélérateurs de vulcanisation donneurs de soufre, soit des accélérateurs de vulcanisation non donneurs de soufre. Les polysulfures d'hydrocarbyle peuvent être choisis parmi ceux qui sont définis dans le brevet FR2528439 cité à titre d'exemple et/ou incorporé par référence dans la présente demande. Les accélérateurs de vulcanisation donneurs de soufre peuvent être choisis parmi les polysulfures de thiurame, comme par exemple, les disulfures de tétrabutylthiurame, les disulfures de tétraéthylthiurame et les disulfures de tétraméthylthiurame. Les accélérateurs de vulcanisation non donneurs de soufre utilisables peuvent être des composés soufrés choisis notamment parmi le mercaptobenzothiazole et ses dérivés, les dithiocarbamates et ses dérivés, et les monosulfures de thiurame et ses dérivés.

On peut citer par exemple le zinc-2-mercaptobenzothiazole, le dibutyldithiocarbamate de zinc, le monosulfure de tétraméthylthiurame. Pour plus de détails sur les accélérateurs de vulcanisation donneurs de soufre et non donneurs de soufre utilisables selon l'invention, on peut se référer aux brevets EP0360656, EP0409683 et FR2528439 cités à titre d'exemple et/ou incorporés par référence dans la présente demande.

On peut également ajouter à la composition bitume/polymère réticulé des dopes d'adhésivité et/ou des agents tensioactifs selon tout procédé connu. Ils sont généralement choisis parmi les dérivés d'alkylamines, les dérivés d'alkyl-polyamines, les dérivés d'alkylamidopolyamines, les dérivés d'alkyl amidopolyamines et les dérivés de sels d'ammonium quaternaire, pris seuls ou en mélange. La quantité de dopes d'adhésivité et/ou des agents tensioactifs dans la composition bitume/polymère réticulé est, par exemple, comprise entre 0,2% et 2% en masse, de préférence entre 0,5% et 1% en masse par rapport à la masse totale de la composition bitume/polymère réticulé.

L'ordre d'introduction des différents constituants ne semble pas avoir d'influence sur les propriétés mécaniques et/ou dynamiques de la composition bitume/polymère réticulé ainsi obtenue. On préférera néanmoins ajouter l'élastomère avant ou en même temps que l'agent de couplage donneur de soufre pour une meilleure homogénéité de la composition.

Selon une variante, l'élastomère et l'agent de couplage donneur de soufre peuvent être introduits simultanément sous forme d'une solution mère, selon tout procédé connu, lors du procédé de préparation de la composition bitume/polymère réticulé. La solution mère comprend, généralement, une huile hydrocarbonée servant de fluidifiant, de 5% à 40% en masse d'élastomère et de 0,02% à 15% en masse d'agent de couplage, de préférence, de 10% à 35% en masse d'élastomère et de 0,1% à 5% en masse d'agent de couplage.

Les compositions bitume/polymère réticulé peuvent être utilisées telles quelles ou bien diluées, selon tout procédé connu, avec des proportions variables de bitume ou d'une composition selon l'invention ayant des caractéristiques différentes pour constituer des liants bitume/polymère ayant une teneur choisie en élastomère réticulé, qui peut être soit égale (composition non diluée) ou bien inférieure (composition diluée) à la teneur en élastomère réticulé des compositions bitume/polymère initiales correspondantes.

Généralement, la dilution des compositions bitume/polymère réticulé peut être réalisée soit directement à la suite de l'obtention desdites compositions, lorsqu'une utilisation quasi immédiate des liants bitume/polymère résultants est requise, ou bien encore après une durée de stockage plus ou moins prolongée des compositions bitume/polymère réticulé, lorsqu'une utilisation différée des liants bitume/polymère résultants est envisagée. Le bitume pour la dilution d'une composition bitume/polymère réticulé selon l'invention peut être choisi parmi les bitumes décrits ci-dessus. Le cas échéant, le bitume utilisé pour la dilution peut avoir été lui-même préalablement traité par un adjuvant acide et/ou un scavenger H₂S selon l'invention.

Les compositions bitume/polymère réticulé obtenues par le procédé de préparation décrit ci-dessus ont des propriétés mécaniques et dynamiques améliorées, notamment un caractère multigrade renforcé. On entend par caractère multigrade renforcé, le fait que ces compositions bitume/polymère réticulé présentent un large intervalle de plasticité. Ledit intervalle est défini comme la différence entre la température de ramollissement bille et anneau, révélatrice des propriétés à chaud du liant ou composition bitume/polymère, et le point de fragilité Fraass, révélateur des propriétés à froid de la composition bitume/polymère réticulé. Le liant bitumineux consistant en/ou à base de la composition bitume/polymère réticulé résistera d'autant mieux aux sollicitations à chaud et à froid que l'intervalle de plasticité est plus large.

De façon plus générale, les compositions bitumineuses obtenues par le procédé de préparation selon la présente invention présentent des propriétés mécaniques et dynamiques améliorées, notamment une meilleure consistance, avec une pénétrabilité à l'aiguille à 25°C plus faible et/ou une température bille anneau plus élevée.

En outre, aux températures de préparation et/ou d'utilisation (transport, chargement, déchargement et stockage) classiquement comprises entre 90°C et 200°C, les émissions de H₂S provenant des compositions bitumineuses, en particulier des compositions bitume/polymère réticulé selon l'invention sont fortement réduites. Le taux en H₂S émis est, en particulier, inférieur à 10 ppm, plus préférentiellement inférieur ou égal à 1 ppm, le taux en H₂S étant mesuré selon une méthode classique de titration d'H₂S en phase liquide.

Diverses utilisations des compositions bitumineuses obtenues selon l'invention sont envisagées. En particulier, les compositions bitumineuses, notamment les compositions bitume/polymère et les compositions bitume/polymère réticulé selon l'invention peuvent être utilisées pour la préparation de liants bitumineux.

Selon un mode de réalisation particulier, un liant bitumineux comprend une composition bitumineuse telle que décrite ci-dessus.

Le liant bitumineux selon l'invention peut à son tour être employé pour préparer une association avec des granulats, notamment routiers.

S'agissant des applications routières, l'invention vise notamment des enrobés bitumineux comme matériaux pour la construction et l'entretien des corps de chaussée et de leur revêtement, ainsi que pour la réalisation de tous travaux de voiries.

Par enrobé bitumineux, on entend, un mélange d'un liant bitumineux avec des granulats et, éventuellement, des charges minérales et/ou synthétiques.

L'enrobé bitumineux comprend un liant bitumineux tel que décrit ci-dessus, et éventuellement des charges minérales et/ou synthétiques, de préférence, choisies parmi des fines, du sable, des gravillons et des fraisats de recyclage. Les granulats sont des granulats minéraux et/ou synthétiques, notamment des fraisats de recyclage, de dimensions supérieures à 2 mm, de préférence comprises entre 2 mm et 20 mm.

Le liant bitumineux décrit ci-dessus peut, avantageusement, être utilisé pour préparer un enduit superficiel, un enrobé à chaud, un enrobé à froid, un enrobé coulé à froid ou une grave émulsion.

S'agissant des applications routières, l'invention vise également des asphaltes comme matériaux pour fabriquer et recouvrir des trottoirs.

Par asphalte, on entend, un mélange de liant bitumineux avec des charges minérales et/ou synthétiques.

Un asphalte comprend un liant bitumineux tel que décrit ci-dessus et des charges minérales telles que des fines, du sable ou des gravillons et/ou des charges synthétiques. Les charges minérales sont constituées de fines (particules de dimensions inférieures à 0,063 mm), de sable (particules de dimensions comprises entre 0,063 mm et 2 mm) et éventuellement de gravillons (particules de dimensions supérieures à 2 mm, de préférence comprises entre 2 mm et 4 mm).

Les asphaltes présentent 100% de compacité et sont principalement utilisés pour fabriquer et recouvrir des trottoirs, alors que les enrobés possèdent une compacité inférieure à 100% et sont utilisés pour fabriquer des routes. Contrairement aux enrobés, les asphaltes ne sont pas compactés au rouleau lors de leur mise en place.

Un autre aspect de l'invention est l'utilisation d'une composition bitumineuse, de préférence une composition bitume/polymère réticulé dans diverses applications industrielles, notamment pour préparer un revêtement d'étanchéité, une membrane ou une couche d'imprégnation.

S'agissant des applications industrielles des compositions bitumineuses, on peut citer la préparation de membranes d'étanchéité, de membranes anti-bruit, de membranes d'isolation, des revêtements de surface, des dalles de moquette, des couches d'imprégnation.

### EXEMPLES

L'invention est illustrée par les exemples suivants donnés à titre non limitatif.

Dans ces exemples, les quantités et pourcentages sont exprimés en masse sauf indication contraire.

Pour mémoire, dans toute la présente demande, les propriétés suivantes des bitumes sont mesurées comme indiqué dans le tableau 1 ci-dessous :

**Tableau 1**

| **Propriété** | **Abréviation** | **Unité** | **Norme de mesure** |
|---|---|---|---|
| Pénétrabilité à l'aiguille à 25°C | P25 | 1/10mm | EN 1426 |
| Température de ramollissement bille et anneau | TBA | °C | EN 1427 |
| Point de fragilité FRAASS | Fraass | °C | EN 12593 |

### Bitume

Le bitume utilisé est issu de résidus sous vide de distillation directe du pétrole brut. Le bitume a une P25 de 43 1/10 mm.

### Elastomère

- copolymère séquencé styrène/butadiène/styrène, à 30,5% en poids de styrène et à 69,5% en poids de butadiène. La teneur en groupement 1,2-vinyle est de 27,8 % en poids par rapport au poids total de copolymère. Le copolymère a une masse moléculaire en poids (Mw) de 142 500 Daltons et un indice de polydispersité Iₚ de 1,09.

### Adjuvant acide

- Acide polyphosphorique 115%, noté **PPA ;** n° CAS 8017-16-1.

### Agent de couplage donneur de soufre

Soufre en fleur ; n° CAS 7704-34-9.

### Scavenger

Les caractéristiques des différents scavengers Sₓ testés sont répertoriées dans le tableau 2 suivant :

**Tableau 2**

| Référence du scavenger S_{X} | Produit | Nom commercial/ Fournisseur | N° CAS |
|---|---|---|---|
| S₁ | Carboxylate de zinc | Nalco | |
| S₂ | Hydroxycarbonate de cuivre (II) | Merck | 12069-69-1 |
| S₃ | Hydroxycarbonate de magnésium | VWR International | 12125-28-9 |
| S₄ | Carbonate de calcium | Sigma-Aldrich | 471-34-1 |
| S₅ | Oxyde de zinc | VWR International | 1314-13-2 |
| S₆ | Oxyde de calcium | Aldrich | 1305-78-8 |
| S₇ | Oxyde de magnésium | VWR International | 1309-48-4 |
| S₈ | Oxyde de cuivre (II) | VWR International | 1317-38-0 |

### Compositions bitume/polymère réticulé C₁ à C₈

On prépare les compositions bitume/polymère réticulé C₁ à C₈ selon un procédé de préparation mettant en oeuvre les trois étapes suivantes :
- *Première étape : préparation des compositions bitume*/*polymère réticulé sans PPA :* C°₁ à C°₉

On introduit dans le réacteur :
- 97,71 % en masse du bitume,
- 2,22% en masse de l'élastomère,

Le mélange est agité à haute densité c'est-à-dire à fort taux de cisaillement pour obtenir un mélange homogène à l'échelle du micron et chauffé à 185°C pendant environ 4 heures.

On ajoute ensuite 0,07 % en masse de l'agent de couplage donneur de soufre.

Le mélange est agité à faible intensité et chauffé à 185°C pendant 2 heures.

Les pourcentages de chacun des constituants sont calculés par rapport à la masse de la composition bitume/polymère réticulé issue de la première étape.
- *Seconde étape : traitement des émissions de H₂**S pour obtenir des compositions bitume*/*polymère réticulé sans PPA avec scavenger* : C^{s}₁ à C^{s}₉

La seconde étape consiste à ajouter 0,2% en masse du scavenger Sₓ. Le scavenger Sₓ est introduit dans le réacteur puis le mélange est agité en maintenant la température à 185°C durant 20 minutes. Le pourcentage de scavenger Sₓ est calculé par rapport à la masse de la composition bitume/polymère réticulé issue de la seconde étape.

Pour les compositions C^{s}₁ à C^{s}₈, le scavenger Sₓ a été rajouté directement dans le réacteur, sans dissolution préalable.

Pour la composition C^{s}₉, le scavenger S₂ a été ajouté en solution à 20% massique dans une huile minérale.
- *Troisième étape :* *traitement acide avec PPA pour obtenir des compositions bitume*/*polymère réticulé avec PPA et scavenger* : C₁ à C₈

La troisième étape consiste à ajouter 0,8% en masse de PPA au milieu réactionnel. Le PPA est introduit dans le réacteur puis le mélange est agité en maintenant la température à 185°C durant 30 minutes. Le pourcentage de PPA est calculé par rapport à la masse de la composition bitume/polymère réticulé issue de la troisième étape.

Les quantités utilisées sont les suivantes : 967,3 g de bitume, 22 g de l'élastomère, 0,7 g de soufre, 2 g de scavenger Sₓ et 8 g de PPA.

### Mesure des émissions de H₂S

La mesure des émissions de H₂S est effectuée selon une méthode de titration du H₂S conventionnelle. La mesure des émissions de H₂S consiste à faire barboter de l'azote gazeux dans la composition bitume/polymère réticulé à tester, maintenue à 185°C, suivi par une mesure du taux de H₂S piégé dans l'azote gazeux au moyen d'un détecteur gazeux de H₂S. Le calcul de la concentration de H₂S dans la phase liquide est basé sur la masse initiale de la composition bitume/polymère réticulé testée.

Cette mesure n'a pas vocation à être représentative du taux de H₂S présent dans le ciel gazeux en temps réel mais a pour but de comparer l'efficacité des scavengers utilisés dans des conditions identiques, en déterminant la présence ou l'absence d'un dégagement d'H₂S. Ainsi, nous avons fixé un seuil limite de dégagement de H₂S au-dessus duquel nous considérons que l'efficacité du scavenger n'est pas suffisante. Cette méthode permet, en outre, de mettre en évidence le phénomène de désactivation de certains scavengers en présence d'un adjuvant acide.

La mesure des émissions de H₂S est effectuée après chacune des trois étapes décrites ci-dessus. Les résultats sont répertoriés dans le tableau 3 ci-dessous.

**Tableau 3**

| PmB | | PmB + S_{X} | | PmB + S_{X} + PPA | |
|---|---|---|---|---|---|
| C°_{X} | H₂S (ppm) | C^{S}ₓ | H₂S (ppm) | Cₓ | H₂S (ppm) |
| C°₁ | >100 | C^{S}₁ | <1* | C₁ | >100 |
| C°₂ | >100 | C^{S}₂ | <1* | C₂ | <1* |
| C°₃ | >100 | C^{S}₃ | >100 | C₃ | >100 |
| C°₄ | >100 | C^{S}₄ | >100 | C₄ | >100 |
| C°₅ | >100 | C^{S}₅ | >100 | C₅ | >100 |
| C°₆ | >100 | C^{S}₆ | >100 | C₆ | >100 |
| C°₇ | >100 | C^{S}₇ | >100 | C₇ | >100 |
| C°₈ | >100 | C^{S}₈ | <1* | C₈ (°) | <1* |
| C°₉ | >100 | C^{S}₉ | <1* | C₉ | <1* |

| | | | | | |
|---|---|---|---|---|---|
| * limite de détection du détecteur gazeux de H₂S (°) selon l'invention | | | | | |

Au vu des résultats rassemblés dans le tableau 3, nous pouvons faire les remarques suivantes :
- Lors de la première étape du procédé de préparation de la composition bitume/polymère C°ₓ, la réticulation au soufre de l'élastomère s'accompagne par un dégagement de H₂S. Les taux de H₂S mesurés dépassent le seuil limite de 100 ppm.
- Lors du traitement de la seconde étape, on peut différencier les scavengers S₁ à S₈ selon leur efficacité à piéger et/ou neutraliser le H₂S. Pour la composition bitume/polymère réticulé C^{s}₃, C^{s}₄, C^{s}₅, C^{s}₆ ou C^{s}₇, l'addition, respectivement, de 0,2% en masse du scavenger S₃, S₄, S₅, S₆ ou S₇ n'est pas suffisante pour réduire le dégagement de H₂S à un taux inférieur à 100 ppm. Les scavengers S₃, S₄, S₅, S₆ et S₇ se révèlent être, par conséquent, des scavengers peu efficaces pour réduire les émissions de H₂S dans les compositions bitume/polymère réticulé.
- En revanche, les scavengers S₁, S₂ et S₈ sont particulièrement efficaces. On arrive à réduire les émissions de H₂S des compositions bitume/polymère réticulé C^{s}₁, C^{s}₂ et C^{s}₈ jusqu'à un taux inférieur à la limite de détection du détecteur gazeux de H₂S (1 ppm).

Par ailleurs, on remarque que l'ajout du scavenger S₂ en solution dans une huile minérale ne dégrade pas l'efficacité dudit scavenger pour réduire les émissions de H₂S de la composition bitume/polymère réticulé C^{s}₉.
- Lors du traitement acide de la troisième étape, le taux mesuré de H₂S dans la composition bitume/polymère réticulé C₁ est, de façon surprenante, nettement supérieur au seuil limite de 100 ppm alors que la mesure effectuée après la seconde étape sur la composition bitume/polymère réticulé C^{s}₁ n'avait révélé quasiment aucune présence de H₂S (<1 ppm). Cette augmentation du taux de H₂S avant et après la troisième étape (20 min après l'introduction du PPA) traduit un phénomène de relargage de H₂S responsable de la désactivation du scavenger S₁.

En outre, ce phénomène de relargage de H₂S est également observé pour les compositions bitume/polymère réticulé C^{s}₃, C^{s}₅ et C^{s}₆ comprenant respectivement les scavengers S₃, S₅ et S₆. En effet, on observe une augmentation significative du taux de H₂S (ΔH₂S ≥ 100 ppm), avant et après la troisième étape (30 min après l'introduction du PPA).

Ainsi, les résultats mettent en évidence que l'ajout de PPA désactive les scavengers S₁, S₃, S₅, S₆ et produit un phénomène de relargage de H₂S dans la composition bitume/polymère réticulé C₁, C₃, C₅, et C₆.

Pour les compositions bitume/polymère réticulé C^{s}₄ et C^{s}₇ comprenant, respectivement, les scavengers S₄ et S₇, il n'est pas possible de se fonder sur ces mesures pour statuer sur la présence d'un phénomène de désactivation du scavenger par le PPA dans la mesure où les scavengers S₄ et S₇ ne sont pas assez efficaces comme scavenger de H₂S.
- L'efficacité des scavengers S₂ et S₈ est particulièrement remarquable en présence de PPA puisque l'on arrive à supprimer la quasi-totalité des émissions de H₂S dans les compositions bitume/polymère réticulé C₂ et C₈.

En outre, la présence de PPA ne dégrade pas l'efficacité des scavengers S₂ et S₈ car on n'observe pas de phénomène de relargage de H₂S dans les compositions bitume/polymère réticulé C₂ et C₈. Les scavengers S₂ et S₈ sont donc compatibles avec un traitement acide de composition bitume/polymère réticulé, en particulier, un traitement avec du PPA.

Par ailleurs, l'efficacité du scavenger S₂ est maintenue après traitement avec du PPA lorsque ledit scavenger est ajouté en solution dans une huile minérale (composition bitume/polymère réticulé C₉).

En conclusion, les sels inorganiques ou organiques de cuivre sont particulièrement efficaces comparativement aux autres sels inorganiques ou organiques métalliques comme scavenger de H₂S de compositions bitume/polymère réticulé mettant en oeuvre un traitement acide, en particulier, un traitement avec du PPA.

### Propriétés des compositions bitume/polymère réticulé

Les caractéristiques des différentes compositions bitume/polymère réticulé mesurées selon les normes citées ci-dessus sont consignées dans le tableau 4 suivant :

**Tableau 4**

| Composition Bitume/polymère réticulé | C^{S}₁ | C₁ | C₂ | C₈ ^{(°)} |
|---|---|---|---|---|
| Scavenger H₂S | S₁ | S₁ | S₂ | S₈ |
| Présence PPA oui/non | non | oui | oui | oui |
| P25 (1/10mm) | 34 | 31 | 27 | 28 |
| TBA (°C) | 62 | 65,4 | 68,4 | 66,8 |
| Fraass (°C) | -8 | -12 | -10 | -9 |
| Intervalle de plasticité (ΔTBA- Fraass) | 70 | 77,4 | 78,4 | 75,8 |

| | | | | |
|---|---|---|---|---|
| (°) selon l'invention | | | | |

La comparaison des résultats de TBA et de Fraass des compositions bitume/polymère réticulé C^{S}₁ et C confirme l'augmentation de l'intervalle de plasticité due au traitement acide au PPA décrite dans l'art antérieur.

L'utilisation du scavenger S₂ d'une part, et l'utilisation du scavenger S₈ selon la présente invention d'autre part, n'affecte pas l'effet du traitement acide sur les propriétés mécaniques et dynamiques de la composition bitume/polymère réticulé, en particulier sur l'intervalle de plasticité. Au contraire, la composition bitume/polymère réticulé C₂ a un intervalle de plasticité élargi comparativement à celui de la composition bitume/polymère réticulé C₁. Quant à l'intervalle de plasticité de la composition C₈, il reste comparable à celui de la composition C₁.

### Utilisation d'un paquet d'additifs scavenger H₂S/adjuvant acide : effet sur les émissions de H₂S et sur les propriétés des compositions bitume/polymère réticulé

### Préparation des paquets d'additifs P₂ et P₈:

Deux paquets d'additifs P₂ et P₈ sont préparés en mélangeant 20% en masse de scavenger S₂ (paquet P₂) ou S₈ (paquet P₈) et 80% en masse de PPA. Les scavengers S₂ et S₈ sont solubles dans le PPA et les paquets d'additifs P₂ et P₈ se présentent sous la forme d'une solution homogène.

### Préparation des compositions bitume/polymère réticulé C'₂ et C'₈ :

Des compositions bitume/polymère réticulé C'₂ et C'₈ ont été préparées en ajoutant respectivement le paquet d'additifs P₂ (composition C'₂) ou P₈ (composition C'₈) à la composition bitume/polymère réticulé C°₂ ou C°₈ obtenue à l'issue de la première étape telle que décrite précédemment.

### Mesure des émissions de H₂S :

La mesure des émissions de H₂S est effectuée après la préparation de la composition bitume/polymère réticulé (première étape) et après l'ajout du paquet d'additifs. Les résultats sont répertoriés dans le tableau 5 ci-dessous.

**Tableau 5**

| PmB | | PmB + Paquet d'additifs | |
|---|---|---|---|
| C°ₓ | H₂S (ppm) | Cₓ | H₂S (ppm) |
| C°₂ | >100 | C'₂ | <1* |
| C°₈ | >100 | C'₈ (°) | <1* |

| | | | |
|---|---|---|---|
| (°) selon l'invention | | | |

Au vu des résultats précédents, on remarque que l'ajout du paquet d'additifs P₂ ou P₈ à l'issue de la première étape du procédé de préparation de la composition bitume/polymère réticulé C°₂ ou C°₈ ne dégrade pas l'efficacité du scavenger à piéger les émissions de H₂S. En effet, on n'observe pas de phénomène de relargage de H₂S dans les compositions bitume/polymère réticulé C'₂ et C'₈. Les scavengers S₂ et S₈ et le PPA peuvent donc être introduits en une fois sous forme d'un paquet d'additif, ce qui permet de raccourcir la durée de préparation d'une composition bitume/polymère réticulé tout en réduisant les émissions de H₂S.

### Propriétés des compositions bitume/polymère réticulé :

Les caractéristiques des différentes compositions bitume/polymère réticulé mesurées selon les normes citées ci-dessus sont répertoriées dans le tableau 6 suivant :

**Tableau 6**

| Composition Bitume/polymère réticulé | C₁ | C₂ | C₈ (°) | C'₂ | C'₈ (°) |
|---|---|---|---|---|---|
| Scavenger H₂S | S₁ | S₂ | S₈ | S₂ | S₈ |
| Présence PPA oui/non | oui | oui | oui | oui | oui |
| P25 (1/10mm) | 31 | 27 | 28 | 23 | 22 |
| TBA (°C) | 65,4 | 68,4 | 66,8 | 71 | 70,4 |
| Fraass (°C) | -12 | -10 | -9 | -10 | -10 |
| Intervalle de plasticité (ΔTBA- Fraass) | 77,4 | 78,4 | 75,8 | 81 | 80,4 |

| | | | | | |
|---|---|---|---|---|---|
| (°) selon l'invention | | | | | |

L'ajout du paquet d'additifs P₂ ou P₈ n'affecte pas l'effet du traitement acide sur les propriétés mécaniques et dynamiques de la composition bitume/polymère réticulé, en particulier sur l'intervalle de plasticité. Au contraire, les compositions bitume/polymère réticulé C'₂ et C'₈ ont un intervalle de plasticité élargi comparativement à celui de la composition bitume/polymère réticulé C₁.

En conclusion, le procédé de préparation des compositions bitume/polymère réticulé selon l'invention permet de réduire de manière substantielle les dégagements d'hydrogène sulfuré (H₂S) en présence d'un adjuvant acide, tout en ayant des propriétés mécaniques et dynamiques comparables à celles des compositions bitume/polymère réticulé de l'art antérieur.

## Revendications

1. Procédé de préparation d'une composition bitumineuse, ce procédé comprenant le traitement d'un bitume ou d'une composition bitumineuse par :
- entre 0,1% et 1% en masse d'un scavenger H₂S choisi parmi les oxydes de cuivre et leurs mélanges avec les hydroxydes, les hydrates, les carbonates, les hydroxy-carbonates, les carboxylates, les nitrates et les phosphates de cuivre, et
- un adjuvant acide choisi parmi les acides phosphoriques, les acides polyphosphoriques et leurs mélanges,
les pourcentages massiques étant calculés par rapport à la masse totale de la composition bitumineuse,
le scavenger H₂S et l'adjuvant acide étant utilisés séparément.

2. Procédé de préparation d'une composition bitumineuse, ce procédé comprenant le traitement d'un bitume ou d'une composition bitumineuse par :
- entre 0,1% et 1% en masse d'un scavenger H₂S choisi parmi les oxydes de cuivre et leurs mélanges avec les hydroxydes, les hydrates, les carbonates, les hydroxy-carbonates, les carboxylates, les nitrates et les phosphates de cuivre, et
- un adjuvant acide choisi parmi les acides phosphoriques, les acides polyphosphoriques et leurs mélanges,
ce procédé comprenant l'ajout direct dans le bitume ou dans la composition bitumineuse d'une composition d'additifs comprenant le scavenger H₂S et l'adjuvant acide,
les pourcentages massiques étant calculés par rapport à la masse totale de la composition bitumineuse.

3. Procédé selon l'une quelconque des revendications 1 et 2, pour la préparation d'une composition bitume/polymère.

4. Procédé selon la revendication 3, pour la préparation d'une composition bitume/polymère réticulé par la mise en oeuvre d'un agent de couplage donneur de soufre.

5. Procédé de préparation d'une composition bitumineuse selon l'une quelconque des revendications 1 à 4, **caractérisé en ce qu'**on met en contact du bitume, l'adjuvant acide et le scavenger H₂S, en opérant à des températures comprises entre 90°C et 200°C et sous agitation pendant une durée d'au moins 10 minutes.

6. Procédé selon l'une quelconque des revendications 1 à 5, **caractérisé en ce que** la proportion d'adjuvant acide est comprise entre 0,05% à 15% en masse, les pourcentages massiques étant calculés par rapport à la masse totale de la composition bitumineuse.

7. Procédé selon l'une quelconque des revendications 1 à 6, **caractérisé en ce que** le scavenger H₂S est choisi parmi les oxydes de cuivre.

8. Procédé selon l'une quelconque des revendications 4 à 7, **caractérisé en ce qu'**il comprend le chauffage du bitume à une température comprise entre 90°C et 200°C durant au moins 10 minutes sous agitation suivi par l'addition de l'adjuvant acide et du scavenger H₂S, le milieu réactionnel étant ensuite maintenu à température durant au moins 10 minutes sous agitation, et **en ce que** ledit procédé comprend en outre une étape d'addition de 0,5% à 10% en masse d'un élastomère, étant entendu que la composition bitumineuse est alors une composition bitume/polymère et les pourcentages massiques étant calculés par rapport à la masse totale de la composition bitume/polymère.

9. Procédé selon la revendication 8, **caractérisé en ce que** l'élastomère est choisi parmi les élastomères réticulables au soufre et **en ce que** le procédé comprend en outre une étape de réticulation dudit élastomère par un agent de couplage donneur de soufre ajouté en quantité propre à fournir de 0,1% à 20% en masse de soufre libre par rapport à la masse d'élastomère réticulable au soufre dans ladite composition, étant entendu que la composition bitumineuse est alors une composition bitume/polymère réticulé.

10. Procédé selon l'une quelconque des revendications 4 à 9, **caractérisé en ce que** l'agent de couplage donneur de soufre est choisi dans le groupe consistant en le soufre élémentaire, les polysulfures d'hydrocarbyle, les accélérateurs de vulcanisation donneurs de soufre, les mélanges de tels produits entre eux et/ou avec des accélérateurs de vulcanisation non donneurs de soufre.

11. Procédé selon l'une quelconque des revendications 8 à 10, **caractérisé en ce que** l'élastomère est choisi parmi les copolymères statistiques ou séquencés d'un hydrocarbure monovinyl aromatique et d'un diène conjugué, de préférence parmi les copolymères statistiques ou séquencés de styrène et d'un diène conjugué.

12. Composition bitumineuse susceptible d'être obtenue par le procédé de préparation tel que défini dans l'une quelconque des revendications 1 à 11.

13. Asphalte **caractérisé en ce qu'**il comprend une composition bitumineuse selon la revendication 12, et des charges minérales et/ou synthétiques.

14. Enrobé bitumineux **caractérisé en ce qu'**il comprend une composition bitumineuse selon la revendication 12 et des granulats, et éventuellement des charges minérales et/ou synthétiques.

## Patentansprüche

1. Verfahren zur Herstellung einer bituminösen Zusammensetzung, wobei dieses Verfahren die Behandlung eines Bitumens oder einer bituminösen Zusammensetzung umfasst mit:
- zwischen 0,1 und 1 Ma% eines H₂S-Fängers, ausgewählt aus den Kupferoxiden und deren Mischungen mit den Kupferhydroxiden, -hydraten, -carbonaten, -hydroxycarbonaten, -carboxylaten, -nitraten und -phosphaten, und
- einem sauren Hilfsmittel, ausgewählt aus den Phosphorsäuren, den Polyphosphorsäuren und deren Mischungen,
wobei die Massenprozentsätze auf die Gesamtmasse der bituminösen Zusammensetzung bezogen berechnet werden,
wobei der H₂S-Fänger und das saure Hilfsmittel getrennt verwendet werden.

2. Verfahren zur Herstellung einer bituminösen Zusammensetzung, wobei dieses Verfahren die Behandlung eines Bitumens oder einer bituminösen Zusammensetzung umfasst mit:
- zwischen 0,1 und 1 Ma% eines H₂S-Fängers, ausgewählt aus den Kupferoxiden und deren Mischungen mit den Kupferhydroxiden, -hydraten, -carbonaten, -hydroxycarbonaten, -carboxylaten, -nitraten und -phosphaten, und
- einem sauren Hilfsmittel, ausgewählt aus den Phosphorsäuren, den Polyphosphorsäuren und deren Mischungen,
wobei dieses Verfahren die direkte Zugabe einer Additivzusammensetzung, die den H₂S-Fänger und das saure Hilfsmittel umfasst, zu dem Bitumen oder der bituminösen Zusammensetzung umfasst,
wobei die Massenprozentsätze auf die Gesamtmasse der bituminösen Zusammensetzung bezogen berechnet werden.

3. Verfahren nach einem der Ansprüche 1 und 2 zur Herstellung einer Zusammensetzung aus Bitumen und Polymer.

4. Verfahren nach Anspruch 3 zur Herstellung einer Zusammensetzung aus Bitumen und vernetztem Polymer durch den Einsatz eines schwefelspendenden Kupplungsmittels.

5. Verfahren zur Herstellung einer bituminösen Zusammensetzung nach einem der Ansprüche 1 bis 4, **dadurch gekennzeichnet, dass** das Bitumen, das saure Hilfsmittel und der H₂S-Fänger bei Temperaturen zwischen 90 °C und 200 °C und unter Rühren während einer Dauer von mindestens 10 Minuten in Kontakt versetzt werden.

6. Verfahren nach einem der Ansprüche 1 bis 5, **dadurch gekennzeichnet, dass** der Anteil des sauren Hilfsmittels zwischen 0,05 bis 15 Ma% liegt, wobei die Massenprozentsätze auf die Gesamtmasse der bituminösen Zusammensetzung bezogen berechnet werden.

7. Verfahren nach einem der Ansprüche 1 bis 6, **dadurch gekennzeichnet, dass** der H₂S-Fänger aus den Kupferoxiden ausgewählt ist.

8. Verfahren nach einem der Ansprüche 4 bis 7, **dadurch gekennzeichnet, dass** es das Erhitzen des Bitumens auf eine Temperatur zwischen 90 °C und 200 °C während mindestens 10 Minuten unter Rühren umfasst, gefolgt von der Zugabe des sauren Hilfsmittels und des H₂S-Fängers, wobei das Reaktionsmedium dann während mindestens 10 Minuten unter Rühren auf Temperatur gehalten wird, und dass das Verfahren ferner einen Schritt der Zugabe von 0,5 bis 10 Ma% eines Elastomers umfasst, mit der Maßgabe, dass die bituminöse Zusammensetzung dann eine Zusammensetzung aus Bitumen und Polymer ist und die Massenprozentsätze auf die Gesamtmasse der Zusammensetzung aus Bitumen und Polymer bezogen berechnet werden.

9. Verfahren nach Anspruch 8, **dadurch gekennzeichnet, dass** das Elastomer aus den schwefelvernetzbaren Elastomeren ausgewählt ist und dass das Verfahren ferner einen Schritt des Vernetzens des Elastomers durch ein schwefelspendendes Kupplungsmittel umfasst, das in einer Menge zugesetzt wird, die geeignet ist, 0,1 bis 20 Ma% freien Schwefel, bezogen auf die Masse des schwefelvernetzbaren Elastomers in der Zusammensetzung, bereitzustellen, mit der Maßgabe, dass die bituminöse Zusammensetzung dann eine Zusammensetzung aus Bitumen und vernetztem Polymer ist.

10. Verfahren nach einem der Ansprüche 4 bis 9, **dadurch gekennzeichnet, dass** das schwefelspendende Kupplungsmittel aus der Gruppe ausgewählt ist, die aus elementarem Schwefel, den Hydrocarbylpolysulfiden, den schwefelspendenden Vulkanisationsbeschleunigern, den Mischungen derartiger Produkte untereinander und/oder mit nicht schwefelspendenden Vulkanisationsbeschleunigern besteht.

11. Verfahren nach einem der Ansprüche 8 bis 10, **dadurch gekennzeichnet, dass** das Elastomer aus den statistischen oder mit einem aromatischen Monovinylkohlenwasserstoff und einem konjugierten Dien sequenzierten Copolymeren, vorzugsweise aus den statistischen oder mit Styrol und einem konjugierten Dien sequenzierten Copolymeren ausgewählt ist.

12. Bituminöse Zusammensetzung, die durch das Herstellungsverfahren nach einem der Ansprüche 1 bis 11 herstellbar ist.

13. Asphalt, **dadurch gekennzeichnet, dass** er eine bituminöse Zusammensetzung nach Anspruch 12 und mineralische und/oder synthetische Füllstoffe enthält.

14. Bituminöses Mischgut, **dadurch gekennzeichnet, dass** es eine bituminöse Zusammensetzung nach Anspruch 12 und Granulate und gegebenenfalls mineralische und/oder synthetische Füllstoffe umfasst.

## Claims

1. A method for preparing a bituminous composition, this method comprising treatment of bitumen or of a bituminous composition with:
- between 0.1 and 1 weight % of H₂S scavenger chosen from among copper oxides and mixtures thereof with copper hydroxides, hydrates, carbonates, hydroxycarbonates, carboxylates, nitrates, and phosphates; and
- an acid additive chosen from among phosphoric acids, polyphosphoric acids and mixtures thereof,
the weight percentages being calculated relative to the total weight of the bituminous composition,
the H₂S scavenger and acid additive being used separately.

2. A method for preparing a bituminous composition, this method comprising treatment of bitumen or of a bituminous composition with:
- between 0.1 and 1 weight % of H₂S scavenger chosen from among copper oxides and mixtures thereof with copper hydroxides, hydrates, carbonates, hydroxycarbonates, carboxylates, nitrates, and phosphates, and
- an acid additive chosen from among phosphoric acids, polyphosphoric acids and mixtures thereof;
this method comprising the direct addition to the bitumen or bituminous composition of a composition of additives comprising the H₂S scavenger and acid additive,
the weight percentages being calculated relative to the total weight of the bituminous composition.

3. The method according to either of claims 1 and 2 for preparing a polymer/bitumen composition.

4. The method according to claim 3, for preparing a Polymer-modified Bitumen composition using a sulfur-donor coupling agent.

5. The method for preparing a bituminous composition according to any of claims 1 to 4, **characterized in that** the bitumen, acid additive and H₂S scavenger are placed in contact, operating at temperatures of between 90 °C and 200 °C and under agitation for a time of at least 10 minutes.

6. The method according to any of claims 1 to 5, **characterized in that** the proportion of acid additive is between 0.05 and 15 weight %, the weight percentages being calculated relative to the total weight of the bituminous composition.

7. The method according to any of claims 1 to 6, **characterized in that** the H₂S scavenger is chosen from among copper oxides.

8. The method according to any of claims 4 to 7, **characterized in that** it comprises heating the bitumen to a temperature of between 90°C and 200°C for a time of at least 10 minutes under agitation, followed by addition of the acid additive and H₂S scavenger, the temperature of the reaction medium then being held for a time of at least 10 minutes under agitation, and **in that** said method further comprises a step to add from 0.5 to 10 weight % of an elastomer, on the understanding that the bituminous composition is then a polymer/bitumen composition and the weight percentages being calculated relative to the total weight of the polymer/bitumen composition:

9. The method according to claim 8, **characterized in that** the elastomer is chosen from among sulfur-crosslinkable elastomers, and **in that** the method further comprises a step to crosslink said elastomer with a sulfur-donor coupling agent added in an amount suitable for providing from 0.1 to 20 weight % of free sulfur relative to the weight of sulfur-crosslinkable elastomer in said composition, on the understanding that the bituminous composition is then a crosslinked Polymer-modified Bitumen composition.

10. The method according to any of claims 4 to 9, **characterized in that** the sulfur-donor coupling agent is chosen from the group formed by elementary sulfur, hydrocarbyl polysulfides, sulfur-donor vulcanization accelerators, mixtures of said products with each other and/or with non-sulfur-donor vulcanization accelerators.

11. The method according to any of claims 8 to 10, **characterized in that** the elastomer is chosen from among statistical or block copolymers of an aromatic monovinyl hydrocarbon and a conjugated diene, preferably from among statistical or block copolymers of styrene and a conjugated diene.

12. A bituminous composition able to be obtained with the preparation method as defined in any of claims 1 to 11.

13. An asphalt, **characterized in that** it comprises a bituminous composition according to claim 12 and mineral and/or synthetic fillers.

14. An asphalt mix **characterized in that** it comprises a bituminous composition according to claim 12 and aggregates, and optionally mineral and/or synthetic fillers.
